# EUROPEAN PATENT APPLICATION

(11) **EP 4 325 910 A1**
(43) Date of publication of application: **21.02.2024**
(21) Application number: 22803712.3
(22) Date of filing: 15.04.2022
(51) Int. Cl.: H04W 4/80

(54) **APPARATUS BASED ON WIRELESS SHORT-RANGE COMMUNICATION PROTOCOL ARCHITECTURE, AND ELECTRONIC DEVICE**

(30) Priority: 18.05.2021 CN 202110543487; 02.08.2021 CN 202110883107
(71) Applicant: Huawei Technologies Co., Ltd., Shenzhen, Guangdong 518129 (CN)
(72) Inventor: ZHANG, Jingyun, Shenzhen, Guangdong 518129 (CN); ZHU, Xudong, Shenzhen, Guangdong 518129 (CN); NI, Guanjun, Shenzhen, Guangdong 518129 (CN); WANG, Jian, Shenzhen, Guangdong 518129 (CN); LIU, Hang, Shenzhen, Guangdong 518129 (CN); LI, Mingchao, Shenzhen, Guangdong 518129 (CN)
(74) Representative: Goddar, Heinz J.
(86) International application number: PCT/CN2022/087104
(87) International publication number: WO 2022/242387

(57) **Abstract**

An apparatus based on a short-range wireless communication protocol architecture and an electronic device are provided, and relate to the field of communication technologies. The short-range wireless communication protocol architecture in the apparatus includes a basic application layer, a basic service layer, and an access layer, and the access layer includes a first access layer and a second access layer. The basic application layer is configured to send a business requirement of a communication business to the basic service layer. The basic service layer is configured to establish a business channel for the communication business based on the business requirement. The business channel corresponds to the first access layer or the second access layer, and the first access layer and the second access layer support different data transmission capabilities. The basic application layer is further configured to send business data of the communication business to the access layer through the business channel. The access layer is configured to transmit the business data by using the first access layer or the second access layer corresponding to the business channel. The electronic device can meet different business requirements of a communication business, to improve data transmission efficiency, and reduce a resource waste.

## Description

This application claims priority to Chinese Patent Application No. 202110543487.8, filed with the China National Intellectual Property Administration on May 18, 2021 and entitled "SHORT-RANGE COMMUNICATION PROTOCOL ARCHITECTURE BASED ON PLURALITY OF PLATFORMS AND SUPPORTING PLURALITY OF TYPES OF BUSINESSES", and to Chinese Patent Application No. 202110883107.5, filed with the China National Intellectual Property Administration on August 2, 2021 and entitled "APPARATUS BASED ON SHORT-RANGE WIRELESS COMMUNICATION PROTOCOL ARCHITECTURE AND ELECTRONIC DEVICE", both of which are incorporated herein by reference in their entireties.

### TECHNICAL FIELD

This application relates to the field of communication technologies, and in particular, to an apparatus based on a short-range wireless communication protocol architecture and an electronic device.

### BACKGROUND

With development of Internet of things technologies, short-range wireless communication technologies are increasingly and widely applied in various fields. For example, in a smart home scenario, a mobile phone may implement end-to-end connection to a smart home device by using the short-range wireless communication technology, to manage and control the smart home device.

Currently, the short-range wireless communication technologies include wireless fidelity (wireless fidelity, Wi-Fi), Bluetooth, and the like. Some technologies support high-bandwidth data transmission, and some technologies support low-energy data transmission. Currently, when running an application program, an electronic device usually selects a short-range wireless communication technology based on preset setting of the application program to perform communication. However, in an actual communication process, different businesses (for example, an audio business and a video business) or different usage scenarios of a same business (for example, playing a standard-definition video and playing a high-definition video in a video business) usually impose different requirements on energy and bandwidth. Therefore, using a same communication technology for businesses of a same application program may cause a resource waste, abnormal data transmission, or another problem. It can be seen that the current short-range wireless communication technology cannot meet diversified data transmission requirements of businesses.

### SUMMARY

This application provides a short-range wireless communication protocol architecture, to resolve, to some extent, a problem that a short-range wireless communication technology cannot meet data transmission requirements of diversified businesses in the conventional technology.

To achieve the foregoing objective, this application uses the following technical solutions.

According to a first aspect, an embodiment of this application provides an apparatus based on a short-range wireless communication protocol architecture. The short-range wireless communication protocol architecture includes a basic application layer, a basic service layer, and an access layer, and the access layer includes a first access layer and a second access layer.

The basic application layer is configured to send a business requirement of a communication business to the basic service layer.

The basic service layer is configured to establish a business channel for the communication business based on the business requirement. The business channel corresponds to the first access layer or the second access layer, and the first access layer and the second access layer support different data transmission capabilities.

The basic application layer is further configured to send business data of the communication business to the access layer through the business channel.

The access layer is configured to transmit the business data by using the first access layer or the second access layer corresponding to the business channel.

According to the apparatus based on the short-range wireless communication protocol architecture provided in this embodiment of this application, for diversified business requirements of different communication businesses, an electronic device may select an appropriate communication manner for each communication business based on a specific business requirement of each communication business. In addition, the apparatus can meet different business requirements, improve data transmission efficiency, and reduce a resource waste.

In some embodiments, the first access layer is a sparklink-basic SLB access layer, and the SLB access layer supports a high-bandwidth data transmission capability. The second access layer is a sparklink-low energy SLE access layer, and the SLE access layer supports a low-energy data transmission capability.

According to the apparatus provided in this embodiment of this application, the electronic device may provide the high-bandwidth or low-energy data transmission capability for the business service based on the business requirement.

In some embodiments, that the basic application layer sends a business requirement of a communication business to the basic service layer specifically includes: The basic application layer determines an application identifier AID based on the business requirement; allocates a port port to the communication business; and requests, based on the AID and the port, the basic service layer to establish the business channel for the communication business.

That the basic service layer establishes a business channel for the business based on the business requirement specifically includes: The basic service layer determines a TCID of the communication business based on the AID of the communication business and a mapping relationship between each AID and a transport channel identifier TCID, where there is a correspondence between the TCID of the communication business and the SLB access layer or the SLE access layer; and establishes an SLB business channel or an SLE business channel corresponding to the TCID of the communication business.

In some embodiments, the business requirement includes a business identifier BID and a quality of service QoS requirement of the business.

In some embodiments, the basic application layer includes:
a basic communication framework, configured to set a device discovery and discoverable mode, a filtering policy, and a discoverable level;
a universal sensing framework, configured to sense a user operation or a change parameter of an electronic device;
a universal video framework, configured to process data related to a video communication business;
a universal audio framework, configured to process data related to an audio communication business;
a universal data framework, configured to encrypt and decrypt data; and/or
a vehicle-mounted control framework, configured to process data related to a vehicle-mounted control business.

According to the apparatus provided in this embodiment of this application, the basic application layer formulates frameworks for various possible and universal application scenarios. After receiving the business requirement, the basic application layer selects a corresponding framework to process a corresponding business.

In some embodiments, the basic service layer includes:
a device discovery module, configured to determine a device role, and perform device discovery and being discovered;
a service management module, configured to provide a data structure model for information sending at the basic application layer, and provide a method for operating a data structure;
a channel management module, configured to manage a transmission channel at the basic service layer, where the management includes establishment, maintenance, and release of the transmission channel, and the transmission channel includes a control channel and the business channel;
a QoS management module, configured to negotiate QoS, and determine quality of service of a communication link;
a security management module, configured to manage secure connection at the basic service layer;
a multi-domain coordination module, configured to: in a scenario in which the electronic device is located in a plurality of communication domains, control and implement information exchange between the plurality of communication domains;
a measurement management module, configured to measure a distance and a relative orientation between the electronic device and another electronic device based on a received signal strength indicator RSSI and a preset algorithm; and/or
a 5G convergence module, configured to establish a channel for a 5G remote management capability.

In some embodiments, the first access layer and the second access layer each include a data link layer and a physical layer, and the data link layer includes a link control layer and a media access layer. The link control layer provides a service for the basic service layer, and is configured to perform encryption/decryption, segmentation/reassembly, sequence number addition, and sorting on data, to form a link control layer protocol data unit LC PDU, and the media access layer is configured to encapsulate the LC PDU, to form a media access layer protocol data unit MAC PDU. The physical layer is configured to transmit the MAC PDU.

According to a second aspect, an embodiment of this application provides an electronic device, including the apparatus based on the short-range wireless communication protocol architecture in the first aspect and the embodiments of the first aspect, and capable of performing short-range wireless communication by using the apparatus.

According to a third aspect, an embodiment of this application provides a computer-readable storage medium. The computer-readable storage medium stores a computer program, and when the computer program is executed by a processor, an electronic device is enabled to have a function implemented by the apparatus based on the short-range wireless communication protocol architecture in the first aspect and the embodiments of the first aspect.

According to a fourth aspect, an embodiment of this application further provides a chip system, including a processor. When the processor executes a computer program stored in a memory, an electronic device is enabled to have a function implemented by the apparatus based on the short-range wireless communication protocol architecture in the first aspect and the embodiments of the first aspect.

According to a fifth aspect, an embodiment of this application provides a computer program product. When the computer program product runs on an electronic device, the electronic device is enabled to have a function implemented by the apparatus based on the short-range wireless communication protocol architecture in the first aspect and the embodiments of the first aspect.

It should be understood that, for beneficial effect of the second aspect to the fifth aspect, refer to related descriptions in the first aspect. Details are not described herein again.

### BRIEF DESCRIPTION OF DRAWINGS

FIG. 1 is a schematic diagram of an application scenario of a short-range wireless communication technology according to an embodiment of this application;
FIG. 2A is a schematic diagram of a structure of a communication domain according to an embodiment of this application;
FIG. 2B is a schematic diagram of a structure of a communication domain according to another embodiment of this application;
FIG. 3 is a schematic diagram of a short-range wireless communication protocol architecture according to another embodiment of this application;
FIG. 4 is a schematic diagram of a transmission channel according to an embodiment of this application;
FIG. 5A, FIG. 5B, and FIG. 5C are a flowchart of data packet processing in an SLB/SLE technology according to an embodiment of this application;
FIG. 6A and FIG. 6B are a flowchart of audio business processing in an SLB/SLE technology according to an embodiment of this application; and
FIG. 7 is a schematic diagram of a structure of an electronic device according to an embodiment of this application.

### DESCRIPTION OF EMBODIMENTS

With reference to accompanying drawings, the following describes technical solutions provided in embodiments of this application.

It should be understood that in descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

Terms "first" and "second" in embodiments are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

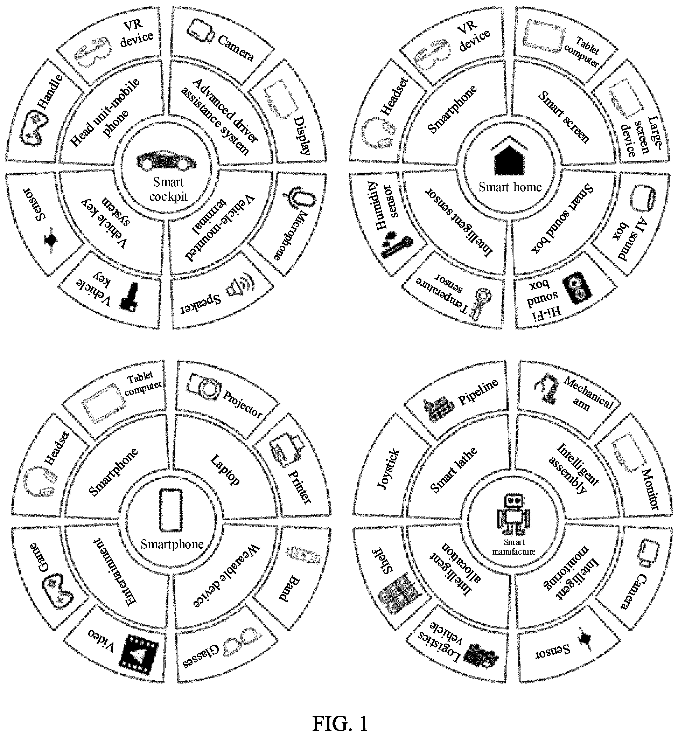

With development of Internet of things technologies, as shown in FIG. 1, application of a short-range wireless communication technology is increasingly wide in fields such as a smart cockpit, a smart home, a smartphone, and smart manufacturing. For example, in a smart home scenario, a mobile phone may implement end-to-end connection to a smart home device by using the short-range wireless communication technology, to manage and control the smart home device. For example, the smart home device includes electronic devices such as a tablet computer, a large-screen device, an artificial intelligence (artificial intelligence, AI) sound box, a high fidelity (high fidelity, Hi-Fi) sound box, a temperature sensor, a humidity sensor, a headset, and a virtual reality (virtual reality, VR) device.

In this embodiment, in addition to the smart home device, the electronic device may further include a mobile phone, a tablet computer, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a mechanical arm, a camera, a joystick, a monitor, a sensor, a logistics vehicle, a smart shelf, and the like. A specific type of the electronic device is not limited in embodiment of this application.

Current short-range wireless communication technologies include Wi-Fi, Bluetooth, near field communication (near field communication, NFC), Zigbee (Zigbee), ultra-wideband (ultra-wideband, UWB), and the like. Technologies such as Wi-Fi and UWB support high-bandwidth communication and have a high data transmission speed. Technologies such as Bluetooth, NFC, and Zigbee support low-bandwidth, low-energy, and low-rate communication, to help save power of a device.

With emergence and development of new businesses such as 4K/8K high-definition video projection, a VR game, a smart home, smart manufacturing, and a smart cockpit, short-range wireless communication needs to have a low delay, high reliability, and a high rate, to ensure normal business execution. However, currently, when running an application program, an electronic device usually selects a short-range wireless communication technology (for example, Wi-Fi) based on preset setting of the application program to perform communication. However, in an actual communication process, different businesses (which are specifically communication businesses, for example, an audio business and a video business) or different usage scenarios of a same business (for example, playing a standard-definition video and playing a high-definition video in a video business) usually impose different requirements on energy and bandwidth. Therefore, using a same communication technology for businesses of a same application program may cause a resource waste, abnormal data transmission, or another problem. It can be seen that the current short-range wireless communication technology cannot meet diversified data transmission requirements of businesses.

Therefore, embodiments of this application provide a short-range wireless communication protocol architecture, used to select a communication technology based on a specific business requirement of each business. This reduces a delay of current short-range wireless communication to some extent, improves reliability of short-range wireless communication, improves resource utilization, improves a data transmission rate, and meets data transmission requirements of diversified businesses.

For ease of understanding the solutions, the following describes some names or terms in embodiments of this application.

### (1) G node/T node

In the short-range wireless communication protocol architecture provided in embodiments, the electronic device is divided into a management node (namely, a grant node, a G node for short) and a managed node (namely, a terminal node, a T node for short). One G node can manage at least one T node, and the G node is connected to the T node to complete a specific communication function (for example, projection from a mobile phone to a television, and data transmission from a mobile phone to a computer). A communication link between the G node and the T node is referred to as a GT link.

### (2) Communication domain

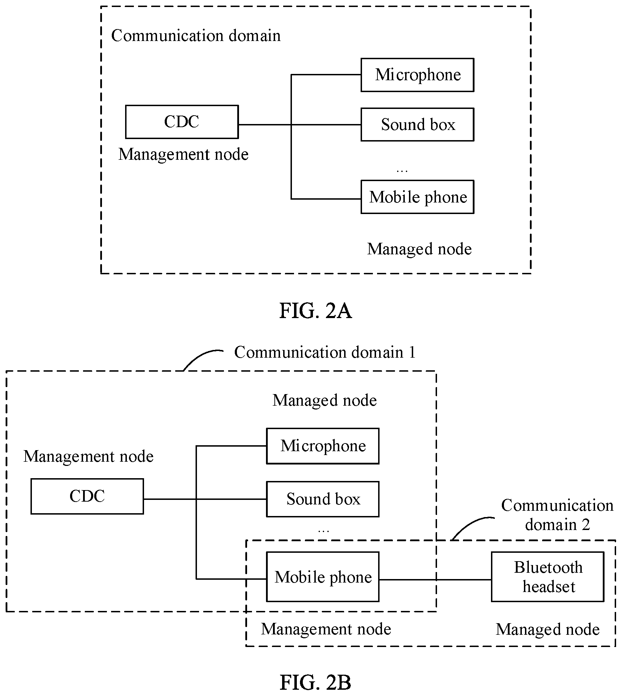

In embodiments, a communication system including one G node and all T nodes connected to the G node is referred to as a communication domain. For example, as shown in FIG. 2A, a smart vehicle scenario is used as an example. A cockpit domain controller (cockpit domain controller, CDC) may be used as a G node, various vehicle-mounted devices (for example, electronic devices such as a microphone, a sound box, and a mobile phone) may be used as T nodes, and the CDC is connected to the vehicle-mounted devices to complete a cockpit entertainment function. In this case, the CDC and all vehicle-mounted devices form a communication domain.

In some embodiments, one electronic device may be located in a plurality of communication domains. For example, as shown in FIG. 2B, the CDC, the microphone, the sound box, and the mobile phone form a communication domain 1. The CDC is a G node, and the microphone, the sound box, and the mobile phone are T nodes. In addition, the mobile phone and a Bluetooth headset further form a communication domain 2. The mobile phone is a G node, and the Bluetooth headset is a T node. The mobile phone is located in both the communication domain 1 and the communication domain 2.

### (3) SLB/SLE link

The GT link includes a sparklink-basic (sparklink-basic, SLB) link and a sparklink-low energy (sparklink-low energy, SLE) link. The SLB link supports high-bandwidth communication and has a high data transmission speed, and the SLE link supports low-energy, low-bandwidth, and low-rate communication, to help save power of a device.

### (4) Transmission channel

The transmission channel (transmission channel, TC) is a channel at a basic service layer in the short-range wireless communication protocol structure. At an upper layer, plurality of ports (port) may be mapped to the transmission channel. At a lower layer, a plurality of transmission channels may be mapped to a same logical channel or different logical channels. The port in embodiments is a logical port, and different businesses usually correspond to different ports, that is, different businesses may be distinguished based on the ports.

The transmission channel includes a control channel and a business channel. The business channel is configured to transmit business-related data, for example, a business control instruction and a media stream. The control channel is the basis for establishing different business channels between devices. In a process of establishing the business channels between the devices, two electronic devices negotiate, on the control channel, a parameter (for example, a transmission mode (for example, a flow mode, a traffic control mode, a retransmission mode, and a basic mode), parameters in different transmission modes, a transport channel identifier (transport channel identifier, TCID) number, and a port port to which the transmission channel is mapped) required for establishing the business channel. Different business channels between businesses may be established by using a same control channel. The businesses may be businesses of a same application program or businesses of different application programs.

### (5) Logical link

The logical link is a channel at an access layer. At an upper layer, a plurality of transmission channels may be mapped to the logical link. In some embodiments, the logical link may also be referred to as a logical channel (logical channel, LC).

### (6) Physical link

The physical link is a link at an access layer. At an upper layer, a plurality of logical links may be mapped to the physical link. In some embodiments, the physical link may also be referred to as a physical channel.

The following describes a short-range wireless communication protocol architecture according to an embodiment of this application.

The electronic device usually stores various application programs, for example, a setting application, a multi-screen collaboration application, a projection application, an audio application, a video application, a gallery application, a camera application, a navigation application, a map application, an email client, and a game application. In a running process of the application programs, if a provided business needs to perform short-range wireless communication with another electronic device, a required communication function may be implemented by using the short-range wireless communication protocol architecture.

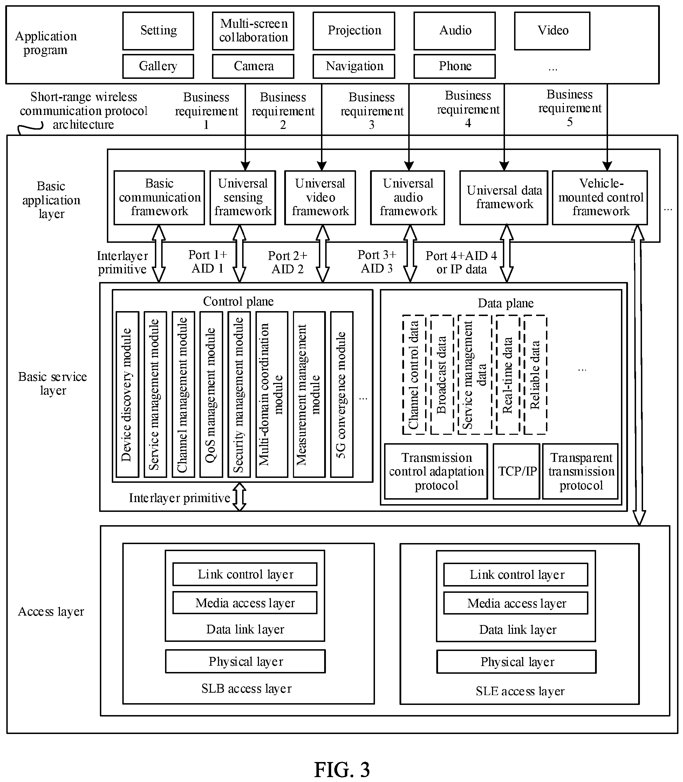

FIG. 3 is a schematic diagram of the short-range wireless communication protocol architecture according to an embodiment of this application. Refer to FIG. 3. The protocol architecture includes a basic application layer, a basic service layer, and a sparklink access layer (which may also be referred to as an access layer). The basic application layer and the basic service layer may be collectively referred to as a host protocol architecture.

The basic application layer defines various universal frameworks for different applications. Each framework defines a corresponding message format and application rule of the framework. To implement communication between different devices on different platforms, the basic application layer formulates frameworks for various possible and universal application scenarios. The frameworks may be, for example, a basic communication framework, a universal sensing framework, a universal video framework, a universal audio framework, a universal data framework, and a vehicle-mounted control framework. After receiving a business requirement, the basic application layer selects a corresponding framework to process a corresponding business.

The basic communication framework is configured to set a device discovery and discoverable mode (for example, a broadcast mode and a polling mode), a filtering policy (for example, in an audio business scenario, device discovery is performed only on an electronic device supporting an audio device), a discoverable level, and the like. In addition, the basic communication framework is further configured to trigger control channel selection based on a business requirement (that is, selecting an SLB control channel or an SLE control channel based on the business requirement), and allocate a port number port to a business.

The universal sensing framework is configured to detect a user operation, device power information, signal strength, and the like. The user operation may include a touch instruction input by a user on a screen of the electronic device, an air control gesture input by the user, a voice control instruction, and the like. The signal strength includes Wi-Fi signal strength, cellular signal strength or Bluetooth signal strength, SLB signal strength, SLE signal strength, and the like.

The universal video framework is configured to process data related to a video business, for example, encoding and decoding video data.

The universal audio framework is configured to process data related to an audio business, for example, encoding and decoding audio data.

The universal data framework is configured to encrypt and decrypt data and the like.

The vehicle-mounted control framework is configured to process data related to a vehicle-mounted control business.

It should be understood that different application programs usually have different business requirements, and the business requirements include a business identifier (business identifier, BID) and quality of service (quality of service, QoS). The QoS includes a bit rate, a delay, a sampling rate, a bit width, and the like. After detecting a business requirement of an application program, the basic application layer can determine an application identifier (application identifier, AID) based on the business requirement, select a corresponding functional module based on the AID to process a business, establish a business channel for the business based on the AID, process data of the business channel, and further send processed data to the access layer. The AID indicates a QoS capability required by a business of an application program.

The basic service layer includes a control plane and a data plane. The control plane includes functional modules such as a device discovery module, a service management module, a channel management module, a QoS management module, a security management module, a multi-domain coordination module, a measurement management module, and a 5G convergence module. The data plane includes channel control data, broadcast data, service management data, real-time data, and reliable data, and further includes a transmission control adaptation protocol, a transmission control protocol/Internet protocol (transmission control protocol/Internet protocol, TCP/IP), a transparent transmission protocol, and the like. It should be noted that, some data (for example, channel control data in a dashed-line box in FIG. 3) of the data plane is usually not included in an initial protocol architecture, but is gradually generated and stored in a process in which the electronic device uses the protocol architecture.

The device discovery module is mainly configured to: determine a device role (that is, determining whether the electronic device is a G node or a T node), perform device discovery and being discovered on a broadcast/unicast data link, determine device information, and the like. In embodiments, the device information includes information such as a domain name of a device, a media access control (media access control, MAC) address, a device role, a device model, and a device capability (for example, a wireless connection type and a supported communication protocol).

In a device discovery process, the device discovery module may specifically be configured to broadcast device information of the electronic device, and scan an electronic device that meets a business requirement. It should be understood that, for a short-range wireless communication business, different business requirements usually correspond to different types of electronic devices. For example, when the mobile phone performs projection, a device discovery module of the mobile phone needs to scan a large-screen device with a projection display function, for example, a television or a projector, but does not scan another electronic device that does not support projection display, for example, a mobile phone or a Bluetooth headset.

In addition, in embodiments, the device discovery module further supports SLB/SLE mutual discovery. In other words, in a process of communicating with a peer device by using an SLB technology, the device discovery module can discover that the peer device enables an SLE communication function, or in a process of communicating with a peer device by using an SLE technology, the device discovery module can discover that the peer device enables an SLB communication function.

The service management module is configured to provide an abstract data structure model for sending of a control instruction and small data at the basic application layer, and provide a method for operating a data structure, for example, reading, writing, notification, and indication.

The channel management module is configured to manage a transmission channel at the basic service layer. The management includes establishment, maintenance, and release of the transmission channel, and support of data transmission through a default transmission channel, or dynamic allocation of a transmission channel for data transmission.

In addition, the channel management module is further configured to manage establishment and maintenance of a cross-layer mapping relationship. The management includes management of a mapping relationship between an AID at the basic application layer and a TCID at the basic service layer, and a mapping relationship between a TCID at the basic service layer and a logical link identifier (logical channel identifier, LCID) at the access layer. The mapping relationship between the TCID and the AID can indicate a mapping relationship between a transmission channel and a business. The mapping relationship between the TCID and the LCID can indicate a correspondence between a transmission channel and a logical link.

The QoS management module is configured to manage a QoS request static table of a business, and negotiate QoS with a peer end. Different businesses usually have different QoS request static tables. The QoS request static table includes parameters such as a transmission delay, a bit rate, a retransmission rate, a transmission bandwidth requirement, a business identifier, and a bit width. Through QoS management, problems such as a network delay and congestion in a process in which the electronic device communicates with the peer end can be alleviated, and communication quality can be improved.

The security management module is configured to manage secure connection at the basic service layer. The management includes identity authentication, air interface communication security protection, key update, privacy protection, application layer transmission security, a password requirement, secure storage of device information, secure execution, security protection, security management, and the like.

The multi-domain coordination module is configured to: in a scenario in which the electronic device is located in a plurality of communication domains, control and implement information exchange between the communication domains, to avoid mutual interference between the plurality of domains, and protect load balancing between the domains. When the electronic device is located in the plurality of communication domains at the same time, the multi-domain coordination module needs to manage establishment of interaction channels between a plurality of G nodes corresponding to the plurality of communication domains, maintain a list and basic information of neighboring G nodes, and coordinate resources between the plurality of domains to perform joint positioning and mobility management, to implement load balancing.

The measurement management module is configured to measure a distance between the device and another electronic device, a relative orientation between the device and another electronic device, and the like based on a received signal strength indicator (received signal strength indicator, RSSI) and a preset algorithm. In addition, the measurement management module is further configured to configure a measurement period, report a measurement event and a measurement result to the basic application layer, schedule a measurement resource, control measurement power, and the like.

The 5G convergence module is configured to establish a channel for a 5G remote management capability, and implement a device with a cellular 5G remote control function by using an authentication and authorization mechanism. In other words, the 5G convergence module enables each node device to make a 5G edge core network to sense and control. For example, when the G node can be connected to a core network, but the T node cannot be connected to the core network, the 5G core network may deliver a control instruction to the T node by using the G node, so that the T node may also be controlled by the 5G core network.

In embodiments, the sparklink access layer includes an SLB access layer and an SLE access layer. The SLB access layer and the SLE access layer each include a data link layer and a physical layer. The data link layer includes a link control layer and a media access layer. The link control layer provides a service for the basic service layer.

At a transmit end, the link control layer is configured to perform necessary operations such as numbering (for example, adding a sequence number SN), segmentation, encryption, and integrity protection on upper-layer business data (namely, data at the basic service layer), and send a generated link control layer protocol data unit (logical channel profile data unit, LC PDU) to the media access layer. The media access layer mainly performs multiplexing and encapsulation on different LC PDUs based on a quantity of scheduled resources, to generate a media access layer protocol data unit (media access protocol data unit, MAC PDU).

At a receive end, the media access layer is responsible for decapsulating data and delivering data to different logical channels. The link control layer may perform necessary operations such as decryption, reassembly, and sorting on data, and deliver business data to the basic service layer in sequence.

The physical layer is configured to provide a data transmission service for the data link layer. The service specifically includes the following functions: correctness verification of transmission information and indication of a verification result to the data link layer, forward error correction (forward error correction, FEC) encoding/decoding of the transmission information, hybrid automatic repeat request (hybrid automatic repeat request, HARQ) soft combining, rate matching of the transmission information to a corresponding physical resource, mapping of encoded transmission information to a corresponding physical resource, modulation and demodulation of physical layer control information and physical layer data information, frequency and time synchronization, and radio feature measurement and indication of a measurement result to the data link layer, multiple-input multiple-output antenna processing, beamforming, radio frequency processing, and the like.

Based on the short-range wireless communication protocol architecture provided in embodiments, a business at the basic application layer may communicate with the peer end by using the SLB technology or communicate with the peer end by using the SLE technology based on different business requirements. The SLB technology is usually used to process a business with a high bandwidth transmission requirement, for example, a wireless projection business or a video call business. A data throughput is usually high during transmission. The SLE technology is usually used to process a business with a small bandwidth transmission requirement, for example, an audio play business based on a Bluetooth headset, and a control business of a smart home device by a mobile phone. A data throughput is usually low during transmission, and a transmission rate and energy are also low.

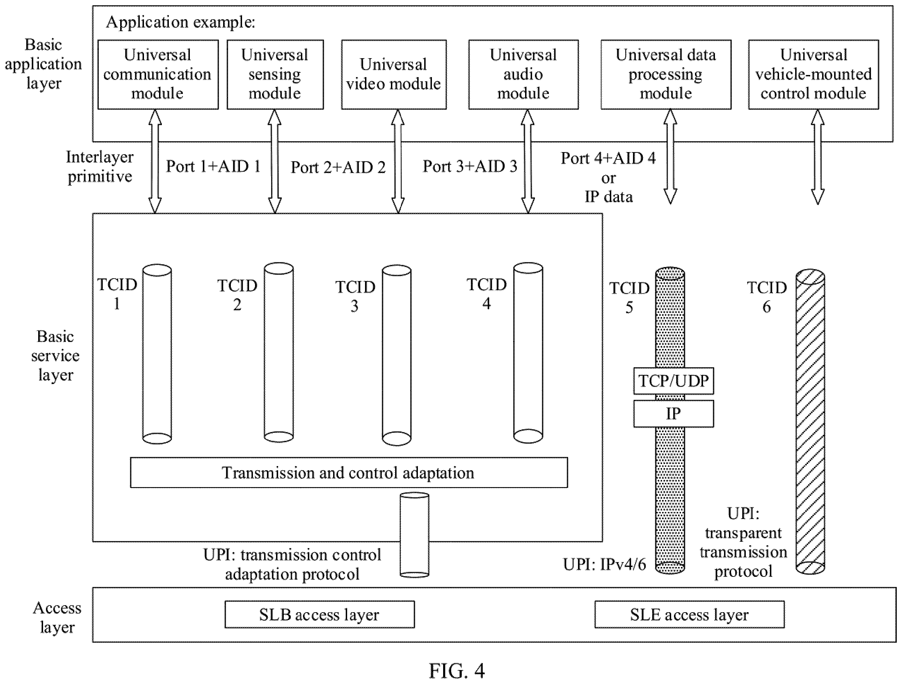

There are a plurality of businesses at the basic application layer. A host protocol structure further determines businesses that need to use the SLB technology to communicate with the peer end and businesses that need to use the SLE technology to communicate with the peer end. With reference to FIG. 4, the following describes a process in which the host protocol structure determines a communication manner based on a business requirement.

The electronic device executes a corresponding business by running an application program. Different application programs have a same type of businesses or different types of businesses, for example, an audio business, a video business, and a data transmission business. Businesses of different types have different business identifiers (BID). For example, as shown in Table 1, a business identifier of an audio business is a BID 1, a business identifier of a data transmission business is a BID 2, and a business identifier of a video business is a BID 3. In addition, different businesses have different requirements for quality of service of data transmission. Some businesses require high fidelity, a low delay, and a high rate during data transmission, and some businesses require low energy of a device during data transmission. Therefore, different application programs configure different QoS for different businesses of the application programs. When establishing a business, an application program needs to send a business requirement of the application program, namely, a BID and QoS of the business, to the basic application layer.

**Table 1**

| BID | Business identifier |
|---|---|
| BID 1 | Audio |
| BID 2 | Data transmission |
| BID 3 | Video |
| ... | ... |

A correspondence (for example, as shown in Table 2) between an application identifier (application identifier, AID), a BID, and QoS of the business is maintained in the basic application layer. Therefore, after receiving the BID and the QoS of the business, the basic application layer may determine, according to the correspondence, the AID corresponding to the business. The AID indicates a QoS capability required by a business.

It should be understood that, because each application program may provide different businesses, and different businesses usually have different QoS requirements, one application program may have one or more AIDs. In addition, the basic application layer further allocates a port to each business flow, and applies for a business channel from the basic service layer by using the AID and the port.

**Table 2**

| AID | BID | QoS | | | |
|---|---|---|---|---|---|
| | | Bit rate | Delay | Sampling rate | Bit width |
| AID 1 | BID 1 | 128 kbps | 100 to 200 ms | 48000 | 16 |
| AID 2 | BID 2 | 256 kbps | 600 to 900 ms | 44100 | 32 |
| AID 3 | BID 3 | 512 kbps | 100 to 200 ms | 48000 | 64 |
| ... | ... | ... | ... | ... | ... |

The basic service layer maintains a mapping relationship (for example, as shown in Table 3) between the AID and the TCID, and a mapping relationship between the TCID and SLB/SLE. The basic service layer may determine a corresponding TCID based on the AID of the business and the mapping relationship, and establish a mapping relationship between the port and the TCID. For example, with reference to the correspondence shown in Table 3, the basic service layer may allocate a business channel TCID 1 to a business whose application identifier is an AID 1, and establish a mapping relationship between the TCID 1 and a port 1; and allocate a business channel TCID 2 to a business whose application identifier is an AID 2, and establish a mapping relationship between the TCID 1 and a port 2.

**Table 3**

| AID | TCID |
|---|---|
| AID 1 | TCID 1 |
| AID 2 | TCID 2 |
| AID 3 | TCID 3 |
| ... | ... |

Because a specific mapping relationship exists between the TCID and the SLB/SLE, after the TCID of the business is determined, the communication technology (for example, SLB or SLE) used by the business is determined. For example, when a transport channel identifier of a business 1 is the TCID 1, and the TCID1 corresponds to the SLB communication technology, the communication technology used by the business 1 is the SLB communication technology. After receiving business data of the business 1, the basic application layer sends the business data to the SLB access layer through the transport channel identifier TCID 1 at the basic service layer, so that the SLB access layer sends the business data to the peer device by using the SLB link.

In the short-range communication protocol architecture provided in embodiments, the SLB technology and the SLE technology have a same business processing procedure. The following uses an audio business as an example to describe the business processing procedure.

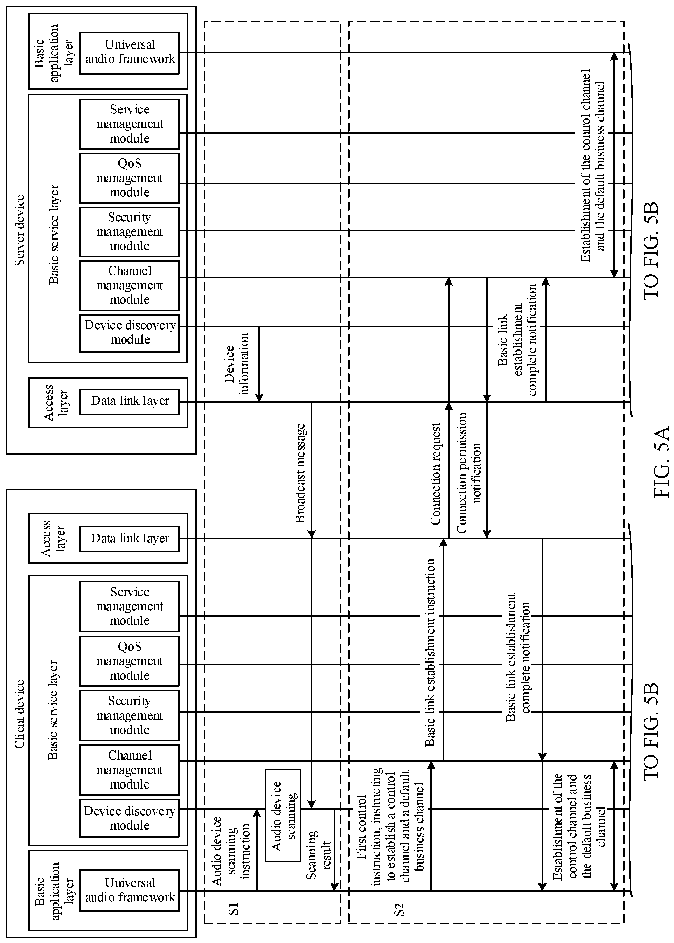

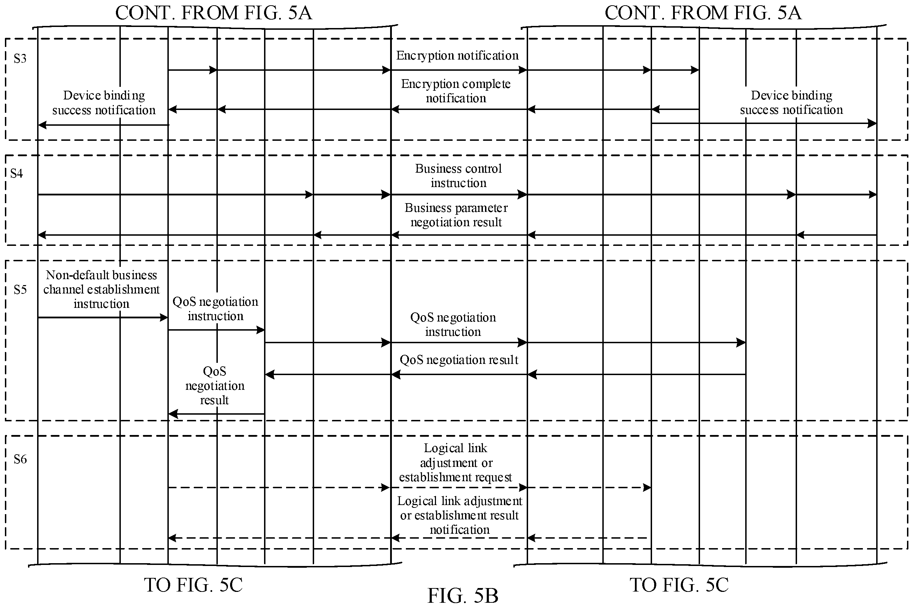

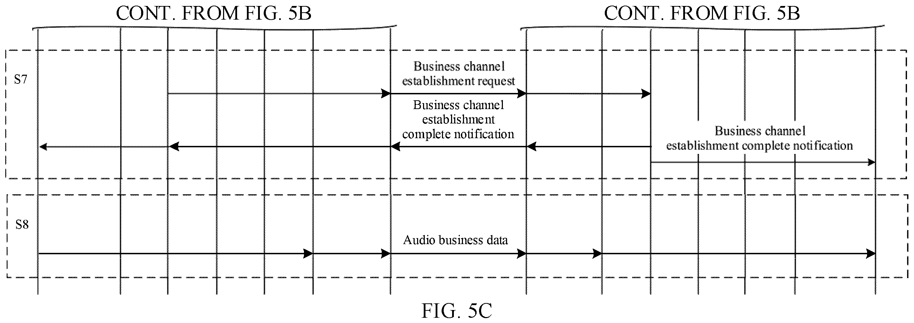

FIG. 5A, FIG. 5B, and FIG. 5C are a flowchart of audio business processing in an SLB/SLE technology according to an embodiment of this application. When the audio business processing procedure is a procedure under the SLB communication technology, an access layer in FIG. 5A, FIG. 5B, and FIG. 5C is an SLB access layer. When the audio business processing procedure is a procedure under the SLE communication technology, an access layer in FIG. 5A, FIG. 5B, and FIG. 5C is an SLE access layer. The audio business processing procedure includes step S1 to step S8.

In this embodiment, two electronic devices communicate with each other in a client/server (Client/Server, C/S) mode. An electronic device that first initiates connection is referred to as a client device, and a device that responds to a connection request to establish connection with a peer end is referred to as a server device. For example, when a mobile phone actively scans for a Bluetooth headset for connection, the mobile phone is a client device, and the Bluetooth headset is a server device.

Step S1: The client device scans and discovers the server device.

On the server device side, a device discovery module sends device information to a data link layer of the device discovery module. The device information includes a device name, a service universally unique identifier (universally unique identifier, UUID), manufacturer information, a device type (for example, a headset, a sound box, and a large-screen device), device appearance, and the like. After receiving the device information, the data link layer sends a broadcast message. The broadcast message includes the device information and the like.

On the client device side, in response to a user operation, a universal audio framework sends an audio device scanning instruction to the device discovery module. The audio device scanning instruction instructs the device discovery module to scan a device (an AI sound box, a Hi-Fi sound box, a Bluetooth headset, a smart sound box, and the like) that supports an audio play function. When scanning the audio device, the device discovery module receives, at the data link layer, the broadcast message sent by the server device.

It should be understood that, the device discovery module of the client device may scan broadcast messages sent by various electronic devices. Some electronic devices support an audio business, and some electronic devices do not support an audio business. Therefore, after receiving the broadcast message, the device discovery module needs to filter the broadcast message based on a current business type (namely, the audio business), select, based on the device information of the broadcast information, an electronic device that supports the audio business, and send, as a scanning result to the universal audio framework, device information of the electronic device that supports the audio business. For example, after the device discovery module receives broadcast messages of a refrigerator, an air conditioner, and a sound box, because the client device needs to scan an audio device, the device discovery module reports only device information of the sound box to the universal audio framework, and does not report device information of another device.

Step S2: The client device and the server device establish a control channel and a default business channel.

When establishing a business channel between devices, the client device and the server device need to negotiate, on the control channel, a parameter required for establishing the business channel. The default business channel may be used to transmit a control instruction, for example, an instruction related to a port for negotiating a business with the server device, of a business (for example, the audio business). Therefore, the client device and the server device need to first establish the control channel and the default business channel. The details are as follows:

On the client device side, the universal audio framework sends a first control instruction to the channel management module. The first control instruction instructs the channel management module to establish the control channel and the default business channel (namely, a default business channel). The channel management module sends a basic link establishment instruction to the data link layer according to the first control instruction. The basic link establishment instruction carries parameters such as connection timeout time, a delay, a connection period, and a target connection address. The data link layer of the client device sends a connection request to the data link layer of the server device according to the basic link establishment instruction, to request to establish connection. In addition to carrying parameters such as connection timeout time, a delay, a connection period, and a target connection address, the connection request further includes a resource allocation status, at a physical layer, of a basic link that requests for establishment, and the like.

On the server device side, after receiving the connection request, the data link layer sends the connection request to the channel management module. After confirming the parameters such as connection timeout time, a delay, and a connection period, the channel management module sends a connection permission notification to the data link layer of the client device by using a local data link layer. In addition, the data link layer of the server device further sends a basic link establishment completion notification to a local channel management module. A universal channel module negotiates with the universal audio framework based on the established basic link, to establish the control channel and the default business channel at the basic service layer.

On the client device side, after receiving the basic link establishment completion notification, the data link layer sends the basic link establishment completion notification to the universal audio framework by using the channel management module. The channel management module negotiates with the universal audio framework based on the established basic link, to establish the control channel and the default business channel.

Step S3: The client device and the server device encrypt the basic link.

On the client device side, the channel management module controls a security management module to send an encryption notification to the server device by using the data link layer. The encryption notification carries key negotiation information such as an encryption key. On the server device side, the security management module receives, by using the data link layer and the channel management module, the encryption notification sent by the client device, and confirms an encryption manner based on key negotiation information. After the confirmation is complete, the security management module controls the channel management module to send an encryption completion notification to the client device by using the data link layer. In addition, the channel management module of the client device further needs to send a device binding success notification to a local universal audio framework.

On the client device side, after receiving the encryption completion notification by using the data link layer, the security management module sends the encryption completion notification to the channel management module. Then, the channel management module sends the device binding success notification to the universal audio framework.

Step S4 to step S7: The client device and the server device establish a non-default business channel (namely, a default business channel).

Step S4: The client device and the server device negotiate a business parameter.

The universal audio framework of the client device sends a business control instruction to the universal audio framework of the server device, to negotiate the business parameter with the server device. For example, for an audio business, the business parameter includes encoding and decoding information (namely, codec information, for example, an encoding format), a transmission bit rate, and the like of the business. For a data transmission business, the business parameter includes a data compression manner, a decoding manner, a transmission bit rate, and the like.

After receiving the business control instruction, the universal audio framework of the server device replies the universal audio framework of the client device with a business parameter negotiation result. The business parameter negotiation result indicates to the client device whether the server device agrees to use the business parameter provided by the client device to process the corresponding business. If the server device agrees to use the business parameter of the client device, negotiation about the business parameter succeeds, and step S5 continues to be performed. If the server device does not agree to use the business parameter of the client device, negotiation about the business parameter fails, and re-negotiation is required.

Step S5: At the client device side, the universal audio framework sends a non-default business channel establishment instruction to the channel management module, where the instruction carries business requirements: a BID and QoS. The channel management module sends a QoS negotiation instruction to the server device by using a QoS management module, to negotiate link quality (namely, XQI) corresponding to the non-default business channel.

On the server device side, after completing QoS negotiation according to the non-default business channel establishment instruction, the QoS management module of the server device side sends a QoS negotiation result to the QoS management module of the client device. The QoS negotiation result includes the link quality (namely, XQI) obtained through negotiation.

Step S6: The client device and the server device adjust or create a logical link. The adjusted or created logical link can meet a transmission requirement of the business data.

It should be noted that step S6 is an optional step. When a default logical link can meet the transmission requirement of the business data, step S6 does not need to be performed, that is, S6 may be omitted. When the default logical link cannot meet the transmission requirement of the business data, the client device and the server device obtain, by performing S6, a logical link that can meet the transmission requirement of the business data.

Step S7: The client device and the server device establish a business channel.

After the client device and the server device complete QoS negotiation, the channel management module of the client device sends a business channel establishment request to the channel management module of the server device by using the local data link layer and the data link layer of the server device. Then, the channel management module of the server device sends a business channel establishment completion notification to a local audio framework and the universal audio framework of the client device, and the business channel is established.

Step S8: The client device sends audio business data to the server device.

On the client device side, after receiving the audio business data sent by an audio play application, the universal audio framework sends the audio business data to a local service management module, so that the service management module sends the audio business data to the server device by using the data link layer.

On the server device side, after receiving the audio business data sent by the client device, the data link layer sends the audio business data to the service management module, so that the service management module sends the audio business data to the universal audio framework. After the universal audio framework sends the audio business data to the audio play application at an upper-layer, the server device may play an audio.

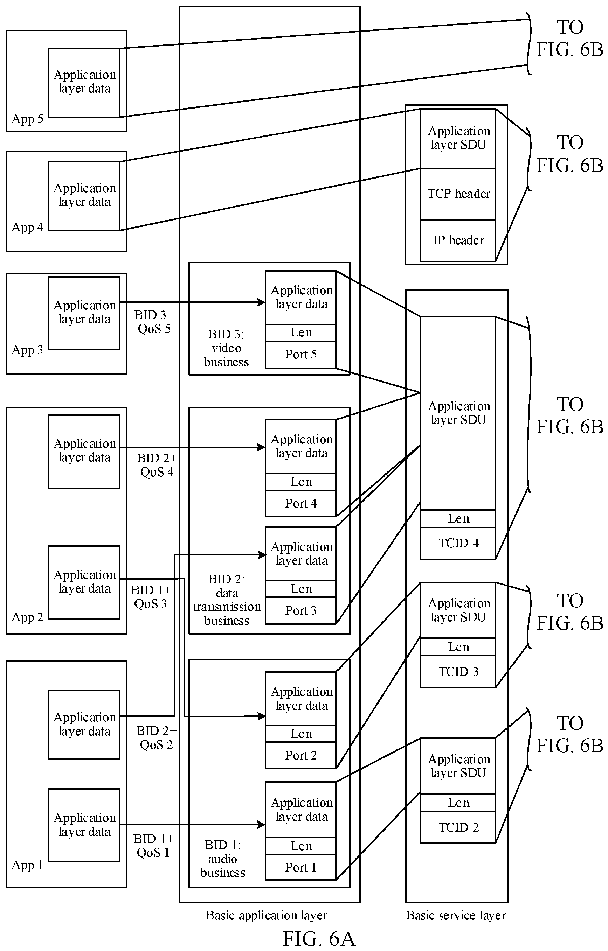

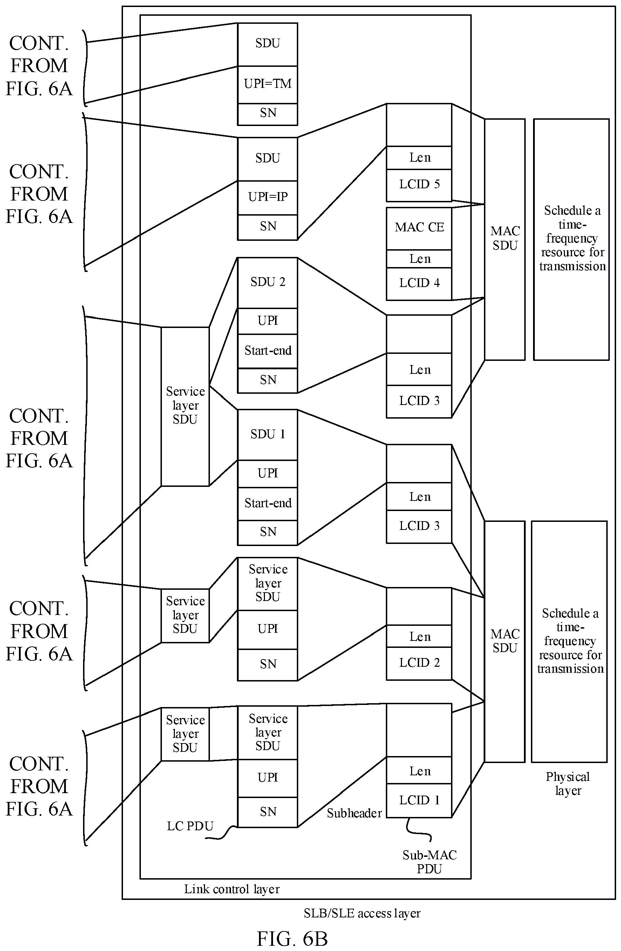

Refer to FIG. 6A and FIG. 6B. With reference to specific businesses of different applications, the following describes a data transmission process under the short-range communication protocol architecture provided in embodiments.

At the basic application layer, different applications can provide different businesses, and different businesses have different business requirements. For example, an app 1 supports an audio business and a data transmission business, business requirements of the audio business are a BID 1 and QoS 1, and business requirements of the data transmission business are a BID 2 and QoS 2. For another example, an app 2 supports an audio business and a data transmission business, business requirements of the audio business are a BID 1 and QoS 3, and business requirements of the data transmission business are a BID 2 and QoS 4. For another example, an app 3 supports a video business, and business requirements of the video business are a BID 3 and QoS 5.

After an application program initiates a business, a basic communication framework at the basic application layer can determine an AID based on a business requirement of the business, and allocate an unoccupied port number to the business based on the AID and a mapping relationship between the AID and the port number. The port number and a length len of application layer data are added to a packet header of the application layer data, to form an application layer service data unit (service data unit) SDU, and the application layer SDU is sent to the basic service layer.

For example, the basic communication framework first determines an application identifier AID 1 based on the business requirements, namely, the BID 1 and the QoS 1, of the audio business of the app 1, and allocates a port number port 1 to the business. Then, the basic communication framework adds the port number port 1 and the length len of the application layer data to the packet header of the application layer data, to form the application layer SDU. Finally, the basic communication framework sends the application layer SDU to the basic service layer.

After receiving the application layer SDU, the basic service layer determines the transport channel identifier, for example, a TCID 2, according to a correspondence between the port number port 1 and a transmission channel. Then, the basic service layer adds a transport channel identifier TCID 2 and a length of the application layer SDU to the application layer SDU, to form a service layer SDU, and sends the service layer SDU to the access layer.

It should be noted that the basic service layer may combine application layer SDUs of different businesses into one application SDU, and transmit the application layer SDU through a same transmission channel. The different businesses may belong to a same application program, or may belong to different application programs. For example, as shown in FIG. 6A and FIG. 6B, the basic service layer may combine application layer SDUs whose port numbers are a port 3, a port 4, and a port 5 into one application layer SDU, and transmit the application layer SDU through a transmission channel whose identifier is a TCID 4.

After the access layer receives the service layer SDU, the link control layer adds a sequence number (sequence number, SN) and an upper-layer protocol indicator (upper protocol identifier, UPI) supported by the electronic device to the service layer SDU, to form a logical link protocol data unit (logical link protocol data unit, LC PDU). In this embodiment, the UPI includes at least one of protocols such as a non-IP protocol, an IP protocol (for example, a TCP/UDP protocol), and a transparent transmission protocol. A scope of the UPI is determined based on a capability supported by the access layer. The scope of the UPI varies with a transmission protocol supported by a lower layer.

It should be noted that, after processing the service layer SDU, the link control layer may divide one service layer SDU into a plurality of sub-SDUs, and add an SN and a UPI to the sub-SDU, to form a plurality of LC PDUs. For example, as shown in FIG. 6A and FIG. 6B, for a service layer SDU including a TCID 4, the link control layer may divide the service layer SDU into an SDU 1 and an SDU 2, and then add a sequence number and a UPI together to the SDU 1 and the SDU 2, to form two LC PDUs.

After the LC PDU is generated, the link control layer adds an LCID and a length len of the LC PDU to the LC PDU, to form a sub-media access control (media access control, MAC) PDU. For example, for an LC PDU corresponding to the audio business of the app 1, the link control layer adds an LCID 1 and len to the LC PDU, to form a sub-MAC PDU.

Finally, the access layer may combine one or more sub-MAC PDUs into one MAC PDU, so that a physical (physical, PHY) layer schedules time domain and frequency domain resources to send the MAC PDU to a peer device. The sub-MAC PDUs may be data packets of a same application program, or may be data packets of different application programs. For example, as shown in FIG. 6A and FIG. 6B, the access layer may combine sub-MAC PDUs whose logical links are respectively an LCID 1, an LCID 2, and an LCID 3 into one MAC PDU. For another example, the access layer may further combine sub-MAC PDUs whose logical links are respectively an LCID 3, an LCID 4, and an LCID 5 into one MAC PDU, and then the physical layer sends the MAC PDU to the peer device.

In addition, in this embodiment, the application program may further transmit data by using the TCP/IP protocol or the transparent transmission protocol. In a transmission process, data processing inside the electronic device is shown as follows:
An app 4 is used as an example. When transmitting data by using the TCP/IP protocol, the app 4 does not need to determine an AID, a port number, a TCID, and the like based on a business requirement, but directly sends application layer data of the app 4 to a TCP/IP protocol stack at the basic service layer, and the protocol stack adds an IP header and a TCP header to the application layer data, to form a service layer SDU. Finally, the link control layer in the access layer adds an SN and a UPI to the service layer SDU, to form an LC PDU, adds an LCID to the LC PDU, to form a sub-MAC PDU, and then generates a MAC PDU based on one or more sub-MAC PDUs. The physical layer sends the MAC PDU to the peer device.

In addition, to improve a data transmission rate and reduce a data transmission delay, the short-range wireless communication protocol architecture provided in embodiments of this application may provide a fast transmission channel from an application program to an access layer for a specific application (for example, a vehicle-mounted control application app 5). The application program may directly and transparently transmit application layer data of the application program to the link control layer through the fast transmission channel. The link control layer adds an SN and a UPI to the data, to form an LC PDU, and sends the LC PDU to the peer end.

Based on the short-range wireless communication protocol architecture and the data packet and the business processing procedure under the protocol architecture provided in the foregoing embodiments, embodiments of this application further provide the following technical solutions.

An embodiment of this application provides an apparatus based on a short-range wireless communication protocol architecture. The short-range wireless communication protocol architecture includes a basic application layer, a basic service layer, and an access layer, and the access layer includes a first access layer and a second access layer.

The basic application layer is configured to send a business requirement of a communication business to the basic service layer.

The basic service layer is configured to establish a business channel for the communication business based on the business requirement. The business channel corresponds to the first access layer or the second access layer, and the first access layer and the second access layer support different data transmission capabilities.

The basic application layer is further configured to send business data of the communication business to the access layer through the business channel.

The access layer is configured to transmit the business data by using the first access layer or the second access layer corresponding to the business channel.

According to the apparatus based on the short-range wireless communication protocol architecture provided in this embodiment of this application, for diversified business requirements of different communication businesses, an electronic device may select an appropriate communication manner (for example, SLB or SLE) for each communication business based on a business requirement of each communication business. The apparatus can meet different business requirements, improve data transmission efficiency, and reduce a resource waste.

Optionally, the first access layer is a sparklink-basic SLB access layer, and the SLB access layer supports a high-bandwidth data transmission capability. The second access layer is a sparklink-low energy SLE access layer, and the SLE access layer supports a low-energy data transmission capability.

Optionally, that the basic application layer is configured to send a business requirement of a communication business to the basic service layer specifically includes: The basic application layer is configured to determine an application identifier AID based on the business requirement; allocate a port port to the communication business; and request, based on the AID and the port, the basic service layer to establish the business channel for the communication business. That the basic service layer is configured to establish a business channel for the business based on the business requirement specifically includes: The basic service layer is configured to determine a TCID of the communication business based on the AID of the communication business and a mapping relationship between each AID and a transport channel identifier TCID, where there is a correspondence between the TCID of the communication business and the SLB access layer or the SLE access layer; and establishes an SLB business channel or an SLE business channel corresponding to the TCID of the communication business.

Optionally, the business requirement includes a business identifier BID and a quality of service QoS requirement of the business.

Optionally, the basic application layer is further configured to: set a device discovery and discoverable mode, a filtering policy, and a discoverable level; sense a user operation or a change parameter of an electronic device; process data related to a video communication business; process data related to an audio communication business; encrypt and decrypt data; and/or process data related to a vehicle-mounted control business.

Optionally, the basic service layer is further configured to: determine a device role, and perform device discovery and being discovered; provide a data structure model for information sending at the basic application layer, and provide a method for operating a data structure; manage a transmission channel at the basic service layer, where the management includes establishment, maintenance, and release of the transmission channel, and the transmission channel includes a control channel and the business channel; negotiate QoS, and determine quality of service of a communication link; manage secure connection at the basic service layer; in a scenario in which the electronic device is located in a plurality of communication domains, control and implement information exchange between the plurality of communication domains; measure a distance and a relative orientation between the electronic device and another electronic device based on a received signal strength indicator RSSI and a preset algorithm; and/or establish a channel for a 5G remote management capability.

Optionally, both the first access layer and the second access layer are configured to: provide a service for the basic service layer, and perform encryption/decryption, segmentation/reassembly, sequence number addition, and sorting on data, to form a link control layer protocol data unit LC PDU; encapsulate the LC PDU, to form a media access layer protocol data unit MAC PDU; and transmit the MAC PDU.

An embodiment of this application further provides an electronic device. The electronic device is the client device or the server device provided in the foregoing embodiments, includes the short-range wireless communication protocol architecture provided in the foregoing embodiments, and can communicate with another electronic device by using the SLB technology and/or the SLE technology provided in the architecture.

An embodiment of this application further provides a short-range wireless communication system. The system includes a client device and a server device, and the client device and the server device each include the short-range wireless communication protocol architecture provided in the foregoing embodiments. The client device and the server device can communicate with each other by using the SLB technology and/or the SLE technology provided in the architecture.

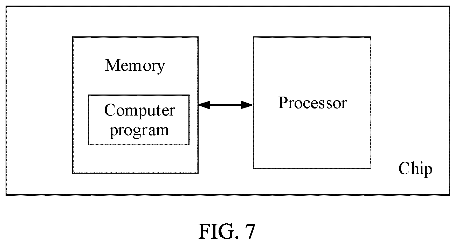

An embodiment of this application further provides a chip system. Refer to FIG. 7. The chip system includes a processor and a memory, and the memory stores a computer program. When the computer program runs on the processor, the short-range wireless communication protocol architecture provided in the foregoing embodiments can be provided for an electronic device.

An embodiment of this application further provides a computer-readable storage medium. The computer-readable storage medium stores a computer program, and when the computer program is executed by a processor, various communication or data processing methods provided by the short-range wireless communication protocol architecture in the foregoing embodiments are implemented.

An embodiment of this application further provides a computer program product. The program product includes a program. When the program is run by an electronic device, the electronic device is enabled to perform various communication or data processing methods provided by the short-range wireless communication protocol architecture in the foregoing embodiments.

It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

It should be understood that, the processor mentioned in embodiments of this application may be a central processing module (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

In embodiments of this application, division into frameworks or modules is merely logical function division and may be other division during actual implementation. For example, a plurality of frameworks or modules may be combined or integrated into another system, or some features may be ignored or not performed.

In addition, functional modules in this application may be integrated into one processing module, or each of the modules may exist alone physically, or two or more modules are integrated into one module. The integrated module may be implemented in a form of hardware, or may be implemented in a form of a software functional module.

It may be clearly understood by a person skilled in the art that, for the purpose of convenient and brief description, for a detailed working process of the foregoing system, apparatus, and module, refer to a corresponding process in the foregoing method embodiments, and details are not described herein again.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. An apparatus based on a short-range wireless communication protocol architecture, wherein the short-range wireless communication protocol architecture comprises a basic application layer, a basic service layer, and an access layer, and the access layer comprises a first access layer and a second access layer;
the basic application layer is configured to send a business requirement of a communication business to the basic service layer;
the basic service layer is configured to establish a business channel for the communication business based on the business requirement, wherein the business channel corresponds to the first access layer or the second access layer, and the first access layer and the second access layer support different data transmission capabilities;
the basic application layer is further configured to send business data of the communication business to the access layer through the business channel; and
the access layer is configured to transmit the business data by using the first access layer or the second access layer corresponding to the business channel.

2. The apparatus according to claim 1, wherein
the first access layer is a sparklink-basic SLB access layer, and the SLB access layer supports a high-bandwidth data transmission capability; and
the second access layer is a sparklink-low energy SLE access layer, and the SLE access layer supports a low-energy data transmission capability.

3. The apparatus according to claim 2, wherein
that the basic application layer is configured to send a business requirement of a communication business to the basic service layer specifically comprises:
the basic application layer is configured to:
determine an application identifier AID based on the business requirement;
allocate a port port to the communication business; and
request, based on the AID and the port, the basic service layer to establish the business channel for the communication business; and
that the basic service layer is configured to establish a business channel for the business based on the business requirement specifically comprises:
the basic service layer is configured to:
determine a TCID of the communication business based on the AID of the communication business and a mapping relationship between each AID and a transport channel identifier TCID, wherein there is a correspondence between the TCID of the communication business and the SLB access layer or the SLE access layer; and
establish an SLB business channel or an SLE business channel corresponding to the TCID of the communication business.

4. The apparatus according to claim 1, wherein the business requirement comprises a business identifier BID and a quality of service QoS requirement of the business.

5. The apparatus according to any one of claims 1 to 4, wherein the basic application layer comprises:
a basic communication framework, configured to set a device discovery and discoverable mode, a filtering policy, and a discoverable level;
a universal sensing framework, configured to sense a user operation or a change parameter of an electronic device;
a universal video framework, configured to process data related to a video communication business;
a universal audio framework, configured to process data related to an audio communication business;
a universal data framework, configured to encrypt and decrypt data; and/or
a vehicle-mounted control framework, configured to process data related to a vehicle-mounted control business.

6. The apparatus according to any one of claims 1 to 5, wherein the basic service layer comprises:
a device discovery module, configured to determine a device role, and perform device discovery and being discovered;
a service management module, configured to provide a data structure model for information sending at the basic application layer, and provide a method for operating a data structure;
a channel management module, configured to manage a transmission channel at the basic service layer, wherein the management comprises establishment, maintenance, and release of the transmission channel, and the transmission channel comprises a control channel and the business channel;
a QoS management module, configured to negotiate QoS, and determine quality of service of a communication link;
a security management module, configured to manage secure connection at the basic service layer;
a multi-domain coordination module, configured to: in a scenario in which the electronic device is located in a plurality of communication domains, control and implement information exchange between the plurality of communication domains;
a measurement management module, configured to measure a distance and a relative orientation between the electronic device and another electronic device based on a received signal strength indicator RSSI and a preset algorithm; and/or
a 5G convergence module, configured to establish a channel for a 5G remote management capability.

7. The apparatus according to any one of claims 1 to 6, wherein the first access layer and the second access layer each comprise a data link layer and a physical layer;
the data link layer comprises a link control layer and a media access layer, wherein the link control layer provides a service for the basic service layer, and is configured to perform encryption/decryption, segmentation/reassembly, sequence number addition, and sorting on data, to form a link control layer protocol data unit LC PDU, and the media access layer is configured to encapsulate the LC PDU, to form a media access layer protocol data unit MAC PDU; and
the physical layer is configured to transmit the MAC PDU.

8. An electronic device, comprising the apparatus based on the short-range wireless communication protocol architecture according to any one of claims 1 to 7, and capable of performing short-range wireless communication by using the apparatus.

9. A computer-readable storage medium, wherein the computer-readable storage medium stores a computer program, and when the computer program is executed by a processor, an electronic device is enabled to have a function implemented by the apparatus based on the short-range wireless communication protocol architecture according to any one of claims 1 to 7.

10. A chip system, comprising a processor, wherein when the processor executes a computer program stored in a memory, an electronic device is enabled to have a function implemented by the apparatus based on the short-range wireless communication protocol architecture according to any one of claims 1 to 7.
